(19) Europäisches Patentamt
European Patent Office
Office européen des brevets

(11) **EP 2 351 705 B1**

(12) **EUROPEAN PATENT SPECIFICATION**

(45) Date of publication and mention
of the grant of the patent:
**30.04.2014 Bulletin 2014/18**

(51) Int Cl.:
***C01B 31/02*** *(2006.01)*     ***D01F 9/127*** *(2006.01)*
***C08K 3/04*** *(2006.01)*     ***B01J 35/10*** *(2006.01)*
***B01J 21/04*** *(2006.01)*

(21) Application number: **10748808.2**

(22) Date of filing: **04.03.2010**

(86) International application number:
**PCT/JP2010/053546**

(87) International publication number:
**WO 2010/101215 (10.09.2010 Gazette 2010/36)**

(54) **CARBON FIBER AGGLOMERATES AND PROCESS FOR PRODUCTION OF SAME**

KOHLEFASERAGGLOMERATE UND HERSTELLUNGSVERFAHREN DAFÜR

AGGLOMÉRATS DE FIBRES DE CARBONE ET LEUR PROCÉDÉ DE FABRICATION

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **05.03.2009 JP 2009052036**

(43) Date of publication of application:
**03.08.2011 Bulletin 2011/31**

(73) Proprietor: **Showa Denko K.K.
Tokyo 105-8518 (JP)**

(72) Inventor: **KAMBARA Eiji
Tokyo 105-8518 (JP)**

(74) Representative: **Strehl Schübel-Hopf & Partner
Maximilianstrasse 54
80538 München (DE)**

(56) References cited:
**EP-A1- 1 797 950     JP-A- 2007 091 482
JP-A- 2008 174 442     US-A1- 2008 213 160
US-B1- 6 214 451**

**Description**

**Technical Field**

The present invention relates to a carbon fiber aggregate, a method of producing the same, and use of the same, and more specifically, to a carbon fiber aggregate suitable as a filler to be added to a resinmaterial for improving the electrical conductivity of the resin material, a method of producing the same, and a composite material including the carbon fiber aggregate.

**Background Art**

There have been conventionally known electrically conductive resin composite materials in which electrical conductivity is imparted by blending an electrically conductive filler such as carbon black, a carbon fiber, or a metal powder to a matrix resin such as a thermosetting resin or a thermoplastic resin.

However, in order to impart high electrical conductivity (a particularly desirable volume resistivity is $1 \times 10^6 \, \Omega \cdot \mathrm{cm}$ or less) to the composite materials of this kind, an electrically conductive filler is necessary to be added in a considerable amount. However, the electrically conductive filler has a drawback in that addition of the electrically conductive filler in a large amount gives an adverse affect to physical properties of the matrix resin, and hence inherent characteristics of the resin are not reflected in a composite material prepared. Thus, there has been demanded a filler material that expresses sufficiently high electrical conductivity even if the filler material is blended in a small amount.

Carbon nanotubes are attracting attention as such filler material. As a method of producing carbon nanotubes, a method using chemical vapor deposition (hereinafter, referred to as a CVD method) is known. Known as the CVD method are, for example, a method involving generating a catalytic metal in a gas phase by using an organic metal complex or the like as a catalyst in a reaction system, and a method using a catalytic metal supported on a support.

Of those CVD methods, the former method in which an organic metal complex or the like is used as a catalyst has included a problem in that a graphite layer has many defects, and hence electrical conductivity is not expressed when a carbon nanotube is added as an electrically conductive filler unless heat treatment is carried out at high temperature additionally after a reaction. Thus, it has been difficult to produce carbon nanotubes at low cost.

The latter method using a catalyst support can be roughly classified into a method using a substrate as a support (substrate method) and a method using a powder-like support. When the substrate method is utilized industrially, many substrates must be used to provide a large substrate surface area, and hence not only equipment efficiency is low, but also produced carbon nanotubes are necessary to be collected from the substrates. Thus, the substrate method is not economical because the number of its production steps is large. As a result, the substrate method has not been put into practical use.

On the other hand, the method using a powder-like support provides a larger specific surface area compared with the method using a substrate, and hence not only equipment efficiency is high, but also the method has an advantage in that reaction equipment used for various chemical syntheses can be used.

Many proposals have been made on the use of fine powders having a high specific surface area, such as alumina, magnesia, silica, and zeolite, as the powder-like support described above. However, the use of any of those supports in a resin composite material has not led to synthesis of carbon fibers capable of imparting electrical conductivity with a small addition amount.

U.S. Patent No. 5,726,116 (Patent Document 1) discloses an aggregate of carbon fibrils that includes a multiplicity of carbon fibrils whose longitudinal axes have substantially the same relative orientation, each of the fibrils characterized as having graphitic layers that are substantially parallel to its longitudinal axis and being free of a continuous thermal carbon overcoat. Examples, in which γ-alumina is used as a catalyst support, of the patent document show that the aggregate of carbon fibrils has the appearance of straight combed yarn including bundles of straight to slightly bent or kinked fibrils.

Examples of WO 95/31281 (Patent Document 2) disclose that carbon fibril aggregates of combed yarn type which is similar to those in Patent Document 1 can be produced by using, as a catalyst support, activated alumina obtained by calcining aluminum hydroxide fine particles (manufactured by Alcoa Inc.: H-705) each having an average particle diameter of 1 μm or less between 280 to 600°C to give about 27 to 33% weight loss.

EP 1797950 (Patent Document 3) discloses catalysts obtained by thermal treatment of aluminum hydroxide after Fe and Co were supported thereon at a specific ratio, and shows that the use of those catalysts leads to improvement in carbon yield. Further, the patent document discloses that aluminum hydroxide of bayerite type is suitable as aluminum hydroxide to be used.

WO 2006/079186 (Patent Document 4) discloses that carbon yield is improved by using a catalyst obtained by supporting a catalytic metal on aluminum hydroxide with a particle size of less than 80 μm as a support, and then subjecting the resultant product to, if required, heat treatment, followed by classification.

Further, also known as examples of using aluminum hydroxide as a support are a case in which there is used, as a support, activated alumina or transition alumina obtained by granulating, if required, a very fine alumina gel or pseudoboehmite obtained by neutralizing (neutralization method) an aqueous solution of an aluminum salt, followed by calcination (JP 52-107329 A; Patent Document 5), and a synthesis method for carbon nanotubes using a catalyst obtained by, for example, neutralizing an aqueous solution of an aluminum salt and a catalytic metal salt to codeposit aluminum and a catalytic metal, followed by, if required, calcination (WO 2006/50903; Patent Document 6).

**Prior Art**

**Patent Documents**

[Patent Document 1] U.S. Patent No. 5,726,116
[Patent Document 2] WO 95/31281
[Patent Document 3] EP 1797950
[Patent Document 4] WO 2006/079186
[Patent Document 5] JP 52-107329 A
[Patent Documen 6] WO 2006/50903

**Disclosure of Invention**

**Problem to Be Solved**

The methods of Patent Documents 1 to 6 were able to contribute, as typical examples were shown in Comparative Examples 1, 2, 10, and 11 mentioned below, to improvement in carbon yield, but had a drawback in that an electrical conductivity-imparting effect was not exhibited particularly when the resultant filler material was added to a resin composite material in a small amount.
In view of the above-mentioned problem, an obj ect of the present invention is to provide a carbon fiber aggregate that is capable of imparting electrical conductivity to a resin composite material even in the case of its addition in a small amount, as a filler material for improving electrical conductivity, thermal conductivity, and strength, and a method of producing the carbon fiber aggregate.

**Means for Solving the Problem**

The inventor of the present invention has made intensive studies to solve the above-mentioned problem. As a result, the inventor has found that a carbon fiber is synthesized by using a supported catalyst prepared by subjecting a specific kind of aluminum hydroxide to heat treatment and then supporting a catalytic metal on the resultant, to thereby yield a carbon fiber aggregate having a peculiar cocoon-shaped aggregation state, and that electrical conductivity is expressed even in a case where the carbon fiber aggregate is added to a resin composite material in a small amount.
Thus, the inventor has completed the present invention.
That is, the present invention includes the following aspects:

[1] A method of producing a carbon fiber aggregate, comprising the steps of:

preparing aluminum hydroxide which has a BET specific surface area of 1 $m^2$/g or less and has a cumulative 50% volume particle diameter ($D_{50}$) of 10 to 300 $\mu$m;
yielding a catalyst support by heat-treating the aluminum hydroxide until the BET specific surface area reaches 50 to 200 $m^2$/g;
having a catalytic metal or a catalytic metal precursor be supported on the catalyst support; and
contacting the catalyst with a carbon-containing compound in a heated zone.

[2] The method of producing the carbon fiber aggregate according to [1] above, in which the aluminum hydroxide is heat-treated at a temperature of 500 to 1000°C.
[3] The method of producing the carbon fiber aggregate according to [1] or [2] above, in which the carbon fiber aggregate is a cocoon-shaped aggregate clump formed by agglomerating secondary aggregate fibers, each of the secondary aggregate fibers having a diameter of 1 $\mu$m or more and a length of 5 $\mu$m or more and being non-linear, which secondary aggregate fibers are formed by agglomerating non-linear carbon fibers, the non-linear carbon fibers each having a diameter of 5 to 100 nm and an aspect ratio of 5 to 1000, and the non-linear carbon fibers comprising graphitic layers which extend approximately parallel to a fiber axis.

[4] The method of producing the carbon fiber aggregate according to [3] above, in which the cocoon-shaped aggregate includes a cocoon-shaped aggregate having a major/minor diameter ratio of 5 or more.

[5] The method of producing the carbon fiber aggregate according to any one of [1] to [4] above, in which the aluminum hydroxide is gibbsite.

[6] The method of producing the carbon fiber aggregate according to any one of [1] to [5] above, in which aluminum hydroxide having a particle size distribution index of 1.50 or less is used, the particle size distribution index being represented by Equation (1),

$$\text{Particle size distribution index} = (D_{90} - D_{10})/D_{50} \quad (1)$$

where $D_{90}$, $D_{10}$, and $D_{50}$ represent a cumulative 90% volume particle diameter, a cumulative 10% volume particle diameter, and a cumulative 50% volume particle diameter, respectively measured by a particle size distribution analyzer.

[7] The method of producing the carbon fiber aggregate according to any one of [1] to [6] above, in which aluminum hydroxide prepared from primary particles each having a size of 5 to 300 $\mu$m is used.

[8] The method of producing the carbon fiber aggregate according to any one of [1] to [7] above, in which the catalytic metal or the catalytic metal precursor includes at least one of Fe, Ni, Co, Cr, Mo, W, Ti, V, Ru, Rh, Pd, Pt, and rare-earth elements.

[9] The method of producing the carbon fiber aggregate according to any one of [1] to [8] above, in which a supported catalyst is used, the supported catalyst being obtained by impregnating a solution or a dispersion including a compound that contains a catalytic metal element into the support, followed by drying.

[10] A resin composite material, which is obtained by the method of producing a carbon fiber aggregate according to any one of [1] to [9] above.

[11] A carbon fiber aggregate, comprising a cocoon-shaped aggregate clump having a major/minor diameter ratio of 5 or more formed by agglomerating secondary aggregate fibers, each of the secondary aggregate fibers having a diameter of 1 $\mu$m or more and a length of 5 $\mu$m or more and being non-linear, which secondary aggregate fibers are formed by agglomerating non-linear carbon fibers, the non-linear carbon fibers each having a diameter of 5 to 100 nm and an aspect ratio of 5 to 1000, and the non-linear carbon fibers comprising graphitic layers which extend approximately parallel to a fiber axis.

[12] A resin composite material, comprising the carbon fiber aggregate according to [10] or [11] above.

[13] A catalyst for producing a carbon fiber aggregate, which is prepared by the steps of:

preparing aluminum hydroxide which has a BET specific surface area of 1 $m^2$/g or less and has a cumulative 50% volume particle diameter ($D_{50}$) of 10 to 300 $\mu$m;

yielding a catalyst support by heat-treating the aluminum hydroxide until the BET specific surface area reaches 50 to 200 $m^2$/g; and

having a catalytic metal or a catalytic metal precursor be supported on the catalyst support.

[14] The catalyst for producing the carbon fiber aggregate according to [13] above, which is obtained by impregnating a solution containing a catalytic metal element into the support, followed by drying;

[15] The catalyst for producing the carbon fiber aggregate according to [13] or [14] above, in which the aluminum hydroxide is gibbsite;

[16] The catalyst for producing the carbon fiber aggregate according to any one of [12] to [15] above, in which the aluminum hydroxide is heat-treated at a temperature of 500 to 1000°C.

[17] The catalyst for producing the carbon fiber aggregate according to any one of [12] to [16] above, in which the catalytic metal element is a combination of an element selected from Fe, Co and Ni, an element selected from Ti, V and Cr, and an element selected from Mo and W.

**Advantageous Effects of Invention**

According to the method of the present invention, the carbon fiber aggregate that is capable of expressing the electrical conductivity of the resin composite material by addition in a small amount is obtained.

**Brief Description of Drawings**

[FIG. 1] FIG. 1 is an electron micrographic image of preferred aluminum hydroxide in a substantially single particle form used in the present invention (1200 magnifications).

[FIG. 2] FIG. 2 is an electron micrographic image of preferred aluminum hydroxide in a primary particle aggregate form used in the present invention (430 magnifications).

[FIGS. 3] FIGS. 3-A and 3-B are electron micrographic images of a pseudoboehmite aggregate grain produced by a neutralization method (A: 200 magnifications, B: 2000 magnifications).

[FIG. 4] FIG. 4 is an electron micrographic image of products (carbon fiber aggregates) of Example 1 (43 magnifications).

[FIG. 5] FIG. 5 is an electron micrographic image of products (secondary aggregate fibers) of Example 1 (2500 magnifications).

[FIG. 6] FIG. 6 is an electron micrographic image of products (primary carbon fibers) of Example 1 (20,000 magnifications).

[FIG. 7] FIG. 7 is an electron micrographic image of products (primary carbon fibers) of Example 1 (2,000,000 magnifications).

[FIG. 8] FIG. 8 is an electron micrographic image of products (carbon fiber aggregates) of Example 4 (55 magnifications).

[FIG. 9] FIG. 9 is an electron micrographic image of products (carbon fiber aggregates) of Example 4 (1300 magnifications).

[FIGS. 10] FIGS. 10-A and 10-B are electron micrographic images of a γ-alumina (manufactured by Strem Chemicals, Inc.) support (A: 2000 magnifications, B: 20,000 magnifications).

[FIG. 11] FIG. 11 is an electron micrographic image of a product of Comparative Example 1 (400 magnifications).

[FIG. 12] FIG. 12 is an electron micrographic image of a product of Comparative Example 1 (5000 magnifications).

[FIG. 13] FIG. 13 is an electron micrographic image of products (carbon fiber aggregates) of Comparative Example 3 (30 magnifications).

[FIG. 14] FIG. 14 is an electron micrographic image of products (carbon fiber aggregates) of Comparative Example 5 (33 magnifications).

[FIG. 15] FIG. 15 is an electron micrographic image of a product of Comparative Example 6 (5000 magnifications).

**Best Mode for Carrying out the Invention**

In preferred embodiments of the present invention, it is possible to obtain a carbon fiber aggregate having a peculiar cocoon-shaped form by bringing a catalyst into contact with a carbon-containing compound under high temperature, the catalyst being prepared by supporting a catalytic metal on a product yielded by heat-treating a specific kind of aluminum hydroxide.

[Aluminum hydroxide]

Hitherto, aluminum hydroxide and its calcinated products have often been used as supports of catalysts for producing carbon fibers. A function required for aluminum hydroxide and its calcinated products as catalyst supports is to suppress the growth of the aggregation of a catalytic metal compound by supporting the catalytic metal compound in a highly dispersed state. Thus, it has been considered that a higher catalytic activity is exerted when aluminum hydroxide and its calcinated products whose particles are fine and which have a larger specific surface area are used as catalysts. Then, as disclosed in Patent Document 2, conventionally, aluminum hydroxide fine particles have been used as a support, or aluminum hydroxide lightly heat-treated to increase its specific surface area has been used as a support.

Moreover, it have been required to work out ideas such as (1) that the support, which constitutes main impurity components of the resultant carbon fiber, is dissolved and removed by using acid or alkali, or (2) that the amount of the support is reduced to an extent at which the support is not necessary to be dissolved and removed, by increasing the yield of the carbon fiber. Even in the case (1) of dissolving and removing the support, it has been considered that as a support component is constituted by finer particles and has a larger specific surface area, the solubility of the support component is higher and better. Further, in the case (2) of not dissolving and removing the support, in order that when a resin composite material is produced, the support does not cause the deterioration of the characteristics of the resin composite material, such as impairing the smoothness of the surface of the resin composite material or serving as the origin of breakage, a support formed of fine particles has been used.

As described above, it has been conventionally considered that a fine support having a larger specific surface area is preferred as a catalyst support.

The present invention has enabled the obtainment of a carbon fiber aggregate that is capable of imparting electrical conductivity to a resin composite with a smaller addition amount than conventional carbon fibers, by using aluminum hydroxide whose particles are large, which is different from the prior arts and the above-mentioned way of thinking, and by adopting the production method described below.

Aluminum hydroxide is synthesized by various methods. Depending on its synthesis method, its synthesis condition, and the like, there can be obtained various kinds of aluminum hydroxide whose crystal form, particle size distribution, impurity amount, and the like are different.

Exemplified as one example of aluminum hydroxide in a preferred form to be used in the present invention is aluminum hydroxide having a gibbsite structure obtained by the Bayer process or the like.

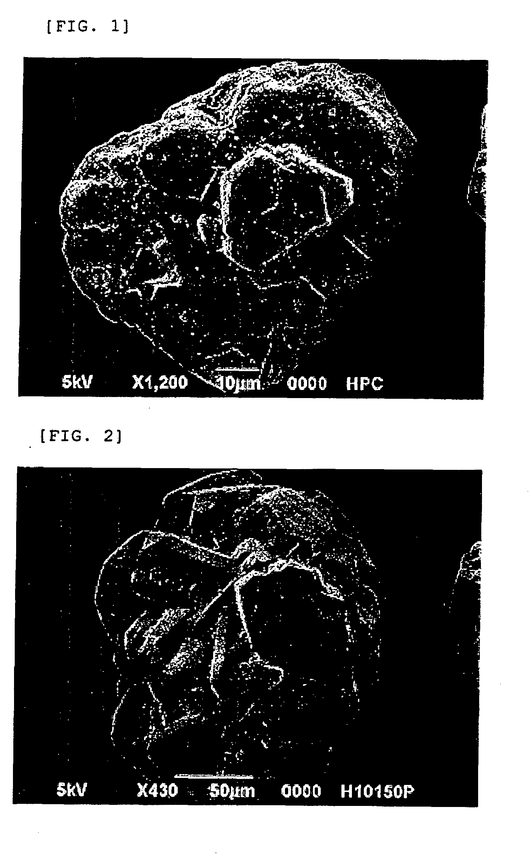

In the present invention, it is preferred to use aluminum hydroxide in a relatively large, single particle form (including a single particle or a structure in which several single particles are firmly aggregated). FIG. 1 and FIG. 2 show electron micrographs of aluminum hydroxide that is used in the present invention. Though an intact particle of aluminum hydroxide has a rough surface or attachment of a few ultrafine particles is observed (FIG. 1), the aluminum hydroxide may preferably be a substantially single particle, or may preferably be an aggregate in which a plurality of primary particles are firmly bound with other particles at their end portions (FIG. 2). In FIG. 2, about 20 primary particles can be observed. Such structures can be directly observed in electron micrographs, but it is not possible to count completely (with 360-degree view) the number of the primary particles constituting the aggregate through electron microscope observation. In the present invention, the following method was used to estimate the average number of primary particles per aggregate. That is, it was assumed that about half the number of intact particles equals to the number of primary particles that were able to be observed with an electron microscope, and two times the number of the primary particles that were able to be observed in an electron micrograph was defined as the total number of the primary particles. It is preferred that the total number of the primary particles be smaller, because aluminum hydroxide is close to one in a single particle form. The suitable number of the primary particles cannot be decided uniquely, because the suitable number varies depending on the particle diameter, particle size distribution, and the like of aluminum hydroxide to be used. Specific examples of the total number of the primary particles is preferably 100 pieces or less, more preferably 50 pieces or less, most suitably 20 pieces or less.

The size of the primary particles is measured by using an electron micrograph. The size of the primary particles is usually difficult to measure correctly because the primary particles are overlapped with each other, and hence outer circumferences that were able to be confirmed were extrapolated to measure approximate sizes. The size of the primary particles is preferably 5 to 300 $\mu$m, more preferably 20 to 200 $\mu$m, most preferably 40 to 200 $\mu$m.

When aluminum hydroxide in a single particle form is used as a support material, the resultant carbon fibers form a cocoon-shaped aggregate clump having a large major/minor diameter ratio, and hence the electrical conductivity-imparting effect is exhibited more significantly even if the aggregate is added to a resin composite material in a small amount. If aluminum hydroxide is not one in a single particle form, cocoon-shaped aggregate particles do not result, or the electrical conductivity-imparting effect is smaller when the resultant aggregate is added to a resin composite material in a small amount.

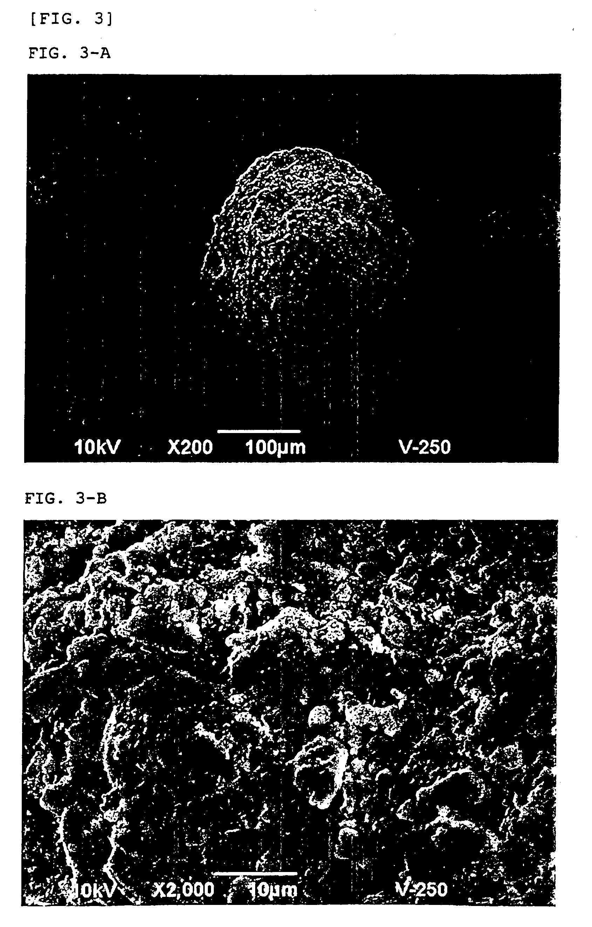

Thus, a fine alumina gel and pseudoboehmite aggregate grain (FIGS. 3) produced by a neutralization method or the like and an aggregate of very fine particles obtained by forming or granulating them are not preferred.

Such aggregate of fine particles is characterized by having a very large specific surface area. A specific surface area is sharply increased by the heat treatment described below, and hence attention is required when the specific surface area is used as a criterion. The BET specific surface area of aluminum hydroxide that is suitable as a support material is 1 m$^2$/g or less, preferably 0.5 m$^2$/g or less, more preferably 0.3 m$^2$/g or less.

Even though aluminum hydroxide in a single particle form is used, if particles each having a cumulative 50% volume particle diameter $D_{50}$ of less than 10 $\mu$m are used as materials, a carbon fiber yield is high, but cocoon-shaped aggregate clumps do not result and the electrical conductivity-imparting effect is small. Thus, the materials are not preferred. Larger particles are preferred because the electrical conductivity-imparting effect of the resultant fiber is higher. However, if such coarse particles as those having a $D_{50}$ of more than 300 $\mu$m are used, a coarse residue derived from a catalyst support remains in a carbon fiber even after the production of the carbon fiber. As a result, when a resin composite material is produced, the coarse residue has an adverse influence such as serving as the origin of breakage.

Thus, the lower limit of the cumulative 50% volume particle diameter $D_{50}$ of aluminum hydroxide is 10 $\mu$m, preferably 40 $\mu$m, more preferably 70 $\mu$m. The upper limit of the cumulative 50% volume particle diameter $D_{50}$ is 300 $\mu$m, preferably 200 $\mu$m. Thus, the range of the cumulative 50% volume particle diameter $D_{50}$ of preferred aluminum hydroxide is 10 to 300 $\mu$m, preferably 40 to 200 $\mu$m, more preferably 70 to 200 $\mu$m. However, the range of the cumulative 50% volume particle diameter $D_{50}$ may be preferably 40 to 150 $\mu$m in some cases depending on uses such as a molded product having a small thickness, a product required to have surface smoothness, a thin film, and a coating material.

The particle size distribution of aluminum hydroxide to be used in the present invention is preferably narrower. However, when the cumulative 50% volume particle diameter $D_{50}$ of aluminum hydroxide is small, a slightly wider particle size distribution is preferred because many particles having a larger diameter are included.

A particle size distribution index that serves as an indicator of the size of the particle size distribution and is defined by the following equation is preferably 1.50 or less, more preferably 1.20 or less, most preferably 1.0 or less.

[0030]     [Math. 1]

$$\text{Particle size distribution index} = (D_{90} - D_{10})/D_{50}$$

In the equation, $D_{10}$, $D_{50}$, and $D_{90}$ represent a cumulative 90% volume particle diameter, a cumulative 10% volume particle diameter, and a cumulative 50% volume particle diameter, respectively, each measured by using a particle size distribution analyzer (manufactured by Nikkiso Co., Ltd.: Microtrac HRA).

When $D_{50}$ is 70 μm or less, the particle size distribution index is preferably 1.0 to 1.50.

[Heat treatment]

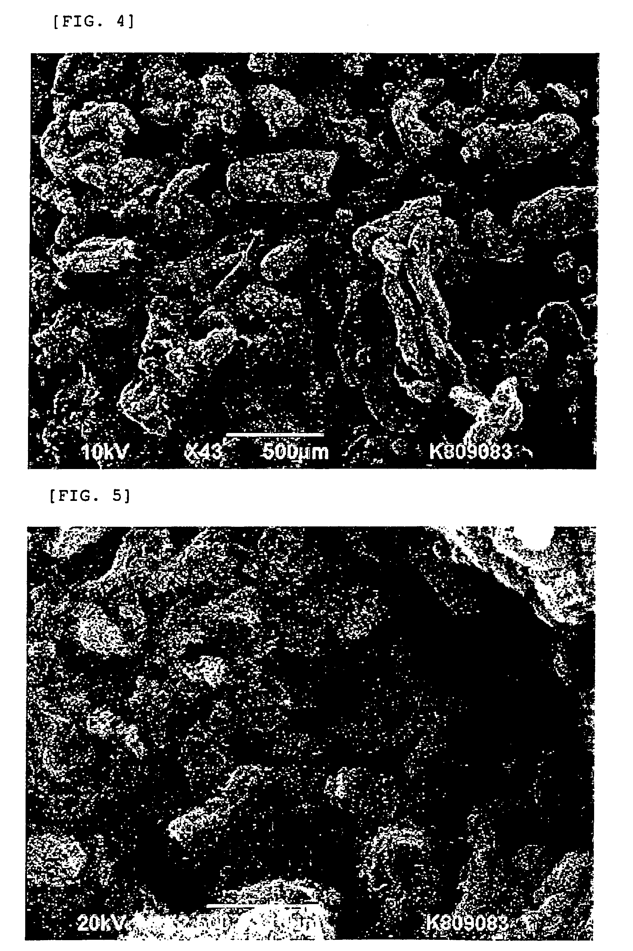

When aluminum hydroxide is subjected to heat treatment, $H_2O$ in its crystal is eliminated, and aluminum hydroxide is converted through amorphous alumina and activated alumina to transition alumina in various forms. After that, heat treatment at a temperature of 1000°C or higher produces α-alumina. The specific surface area shows the highest value when amorphous alumina is formed in the course of the heat treatment, and after that, the value of the specific surface area is decreasing (Oxides and Hydroxides of Aluminum, K. Wefers and G. M. Bell Technical Paper (AlcoaResearchLabs), 1972: Reference). In general, a catalyst support obtained by carrying out a treatment at relatively low temperatures has been therefore used as a catalyst support for synthesizing carbon fibers desired to have a high specific surface area. As disclosed in WO 95/31281 A1 (Patent Document 2), specific examples include a catalyst support obtained by subjecting an aggregate grain of submicron aluminum hydroxide (specific examples include H-705 manufactured by Alcoa Inc., having a BET specific surface area of 5 $m^2$/g or more) to heat treatment so as to reach 27 to 33% weight loss. In this case, the specific surface area is estimated to be about 150 to 300 $m^2$/g with reference to FIG. 4.4 in Reference.

However, the use of such catalyst support having a large specific surface area has had a drawback in that the electrical conductivity-imparting effect on a composite material lowers (see Comparative Example 9 described below). The production method of the present invention is characterized in that the above-mentioned specific kind of aluminum hydroxide is subjected to heat treatment under a condition under which a specific surface area lower than the conventional specific surface area level results.

Further, when such methods as those disclosed in EP 1797950 A (Patent Document 3) and WO 2006/079186 A1 (Patent Document 4) are used, the methods involving supporting a catalytic metal on aluminum hydroxide and then subjecting the resultant product to heat treatment, the electrical conductivity-imparting effect of the resultant carbon nanotube on a resin composite material becomes lower compared with the method of the present invention, probably because the interaction between aluminum hydroxide and the catalytic metal is intensified as a dehydration reaction in aluminum hydroxide progresses, and hence the catalytic metal forms a solid solution with a support or is bound with the support firmly (see Comparative Example 10 described below).

The method of the present invention is characterized in that a relatively coarse support material (aluminum hydroxide) is subjected to heat treatment at relatively high temperatures without use of the support described above that is generally used and has a high activity, and the resultant compound in a state of not having a very strong activity supports a catalytic metal, thereby involving in a synthesis reaction of a carbon fiber.

Thus, the BET specific surface area of aluminum hydroxide to be used as a support material in the present invention is 50 to 200 $m^2$/g after heat treatment. To be specific, the lower limit of the BET specific surface area is 50 $m^2$/g, preferably 90 $m^2$/g. The upper limit of the BET specific surface area is 200 $m^2$/g, preferably 150 $m^2$/g, more preferably 145 $m^2$/g. The BET specific surface area does not exceed 200 $m^2$/g, because the electrical conductivity-imparting effect of a carbon fiber obtained by using a metal-supported catalyst on a composite material becomes small. The BET specific surface area is not lower than 50 $m^2$/g, because not only the carbon fiber yield of a metal-supported catalyst is low, but also the electrical conductivity-imparting effect of the resultant carbon fiber on a composite material becomes small.

The conditions of heat treatment to aluminum hydroxide may only be set to a temperature, time, and atmosphere at which the above-mentioned specific surface areas result, and are not particularly limited. A proper temperature varies depending on the particle size, impurity concentration, or the like of aluminum hydroxide to be used, and is preferably 500 to 1000°C, more preferably 600 to 1000°C, most preferably 600 to 900°C. In general, when aluminum hydroxide is calcined to yield transition alumina (intermediate alumina) having a high specific surface area, such as activated alumina, heat treatment is carried out at high temperatures for a very short time in many cases. Unlike those methods, the present invention provides a uniform support material by carrying out heat treatment at a proper temperature for a relatively long time. Thus, the heat treatment time is, in general, preferably 1 minute to 10 hours, more preferably 10 minutes to 5 hours, most suitably 10 minutes to 3 hours.

[Catalytic metal and catalytic metal precursor]

The catalytic metal to be used in the present invention is not particularly limited as long as the catalytic metal is a substance for promoting the growth of carbon fibers. Examples of the catalytic metal described above include at least one kind of metal selected from the group consisting of Groups 3 to 12 in the 18-group type element periodic table recommended by IUPAC in 1990. In particular, preferred is at least one kind of metal selected from the group consisting of Groups 3, 5, 6, 8, 9, and 10. Particularly preferred is at least one kind of metal selected from iron (Fe), nickel (Ni), cobalt (Co), chromium (Cr), molybdenum (Mo), tungsten (W), vanadium (V), titanium (Ti), ruthenium (Ru), rhodium (Rh), palladium (Pd), platinum (Pt), and rare earth elements. Further, a compound (catalyst precursor) containing one of those metal elements that act as catalysts is not particularly limited, as long as the compound is one containing a catalytic metal, such as an inorganic salt such as a nitrate, sulfate, or carbonate of the catalytic metal, an organic salt such as an acetate of the catalytic metal, an organic complex such as an acetylacetone complex of the catalytic metal, and an organic metal compound of the catalytic metal. From the viewpoint of reactivity, nitrates, acetylacetone complexes, and the like are preferred.

It is widely known that a reaction activity is controlled by using two or more kinds of those catalytic metals and catalytic metal precursor compounds. Preferred examples of the catalyst include a combination of an element selected from Fe, Co, and Ni, an element selected from Ti, V, and Cr, and an element selected from Mo and W, which is disclosed in JP 2008-174442 A.

[Method of supporting catalytic metal]

The preparation method for a supported catalyst to be used in the production method of the present invention is not particularly limited. The supported catalyst is preferably produced particularly by an impregnation method involving obtaining a catalyst by impregnating a liquid containing a catalytic metal element into a support.

Specific examples of the impregnation method include a method that involves dissolving or dispersing a catalytic metal precursor compound in a solvent, and impregnating the solution or the dispersion into a powdered support, followed by drying.

The liquid containing a catalytic metal element may be a liquid organic compound containing a catalytic metal element, or may be a solution obtained by dissolving or dispersing a compound containing a catalytic metal element in an organic solvent or water. Examples of the organic solvent to be used in this case include: aromatic hydrocarbons such as benzene, toluene, and xylene; saturated hydrocarbons such as hexane and cyclohexane; ethers such as diethyl ether, dimethyl ether, methyl ethyl ether, furan, dibenzofuran, chloroform, and tetrahydrofuran; aldehydes such as formaldehyde, acetaldehyde, propionaldehyde, acrolein, and benzaldehyde; and halogenated hydrocarbons such as carbon tetrachloride, trichloroethylene, and chloroethane.

A dispersant or a surfactant (preferably a cationic surfactant or an anionic surfactant) may be added in the liquid containing a catalytic metal element for the purpose of, for example, improving the dispersibility of the catalytic metal element. The concentration of the catalytic metal element in the liquid containing a catalytic metal element may be appropriately selected depending on the kind of a solvent and the kind of a catalytic metal. The amount of the liquid containing a catalytic metal element which is mixed with a support is preferably equivalent to the liquid-absorbing amount of the support to be used.

After the liquid containing a catalytic metal element and the support are sufficiently mixed, drying is carried out usually at 70 to 150°C. Vacuum drying may be used for drying.

[Carbon-containing compound]

A carbon source (carbon-containing compound) to be used in the method of producing a carbon fiber aggregate of the present invention is not particularly limited. It is possible to use, as the carbon-containing compound, general organic compounds in addition to $CCl_4$, $CHCl_3$, $CH_2Cl_2$, $CH_3Cl$, $CO$, $CO_2$ $CS_2$, and the like. There can be exemplified, as particularly highly useful compounds, $CO$, $CO_2$ aliphatic hydrocarbons, and aromatic hydrocarbons. In addition, it is also possible to use carbon compounds each containing an element such as nitrogen, phosphorus, oxygen, sulfur, fluorine, chlorine, bromine, or iodine.

Preferred specific examples of the carbon-containing compound include: inorganic gases such as $CO$ and $CO_2$; alkanes such as methane, ethane, propane, butane, pentane, hexane, heptane, and octane; alkenes such as ethylene, propylene, and butadiene; alkynes such acetylene; monocyclic aromatic hydrocarbons such as benzene, toluene, xylene, and styrene; polycyclic compounds each having a fused ring such as indene, naphthaline, anthracene, and phenanthrene; cycloparaffins such as cyclopropane, cyclopentane, and cyclohexane; cycloolefins such as cyclopentene, cyclohexene, cyclopentadiene, and dicyclopentadiene; and alicyclic hydrocarbon compounds each having a fused ring such as steroid. Further, there can be also used derivatives in each of which oxygen, nitrogen, sulfur, phosphorus, or a halogen is contained in those hydrocarbons, for example, oxygen-containing compounds such as methanol, ethanol, propanol, and butanol; sulfur-containing aliphatic compounds such as methylthiol, methyl ethyl sulfide, and dimethyl thioketone; sulfur-containing aromatic compounds such as phenylthiol and diphenyl sulfide; sulfur-containing or nitrogen-containing heterocyclic compounds such as pyridine, quinoline, benzothiophene, and thiophene; halogenated hydrocarbons such as chloroform, carbon tetrachloride, chloroethane, and trichloroethylene; natural gas, gasoline, lamp oil, heavy oil, creosote oil, kerosene, turpentine oil, camphor oil, pine oil, gear oil, and cylinder oil. Two or more kinds of them may be used as a mixture.

Of those, as preferred carbon-containing compounds, there are exemplified CO, methane, ethane, propane, butane, ethylene, propylene, butadiene, methanol, ethanol, propanol, butanol, acethylene, benzene, toluene, xylene, and a mixture of them. As particularly preferred carbon-containing compounds, ethylene, propylene, and ethanol are exemplified.

[Carrier gas]

In the method of producing a carbon fiber aggregate of the present invention, it is recommended that a carrier gas be used in addition to those carbon-containing compounds. It is possible to use, as the carrier gas, a hydrogen gas, a nitrogen gas, a carbon dioxide gas, a helium gas, an argon gas, a krypton gas, or a mixed gas thereof. However, a gas containing an oxygen molecule (that is, oxygen in a molecular state: $O_2$), such as air, is not suitable, because a catalyst is deteriorated. The catalytic metal precursor compound to be used in the present invention is in an oxidized state in some cases. Thus, in that case, it is preferred that a gas containing a reductive hydrogen gas be used as the carrier gas. That is, the carrier gas contains a hydrogen gas at preferably 1 vol% or more, more preferably 30 vol% or more, most preferably 85 vol% or more. Examples of the carrier gas include a 100 vol% hydrogen gas and a gas obtained by diluting a hydrogen gas with a nitrogen gas.

[Pretreatment]

In general, a catalytic metal precursor compound is in an oxidized state in some cases, and hence there is often subjected to a step of reducing the catalytic metal precursor compound into a catalytic metal by bringing the catalytic metal precursor compound into contact with a reductive gas before bringing a catalyst into contact with a carbon-containing compound. However, when such reduction treatment is carried out in the present invention, a carbon fiber yield becomes insufficient or the electrical conductivity-imparting effect of the produced carbon fiber on a resin composite material becomes lower, probably because the aggregation of catalytic metals progresses. In the present invention, it is preferred that retention time at high temperatures including time for such reduction treatment be as short as possible.

Thus, when a catalyst is preliminarily left to stand still in a reaction furnace to make a reaction while increasing temperature, it is preferred that the rate of temperature increase be made faster and the catalyst be brought into contact with a carbon-containing compound immediately after temperature reaches a predetermined one. More preferred is a method involving supplying a catalyst simultaneously with a carbon-containing compound after increasing the temperature in a reaction furnace to a predetermined one.

[Concentration of carbon-containing gas]

When the above-mentioned carbon-containing compound is liquid or solid at normal temperature, the carbon-containing compound is preferably heated to vaporization to be introduced as a carbon-containing gas. The supply amount of the carbon-containing gas cannot be uniquely determined because the supply amount varies depending on catalysts, carbon-containing compounds, and reaction conditions to be used. A generally preferred range is 10 to 90 vol% and more preferred one is 30 to 70 vol%, based on the expression, (flow rate of carbon-containing gas)/(flow rate of carrier gas + flow rate of carbon-containing gas). When the carbon-containing gas is ethylene, the range of 30 to 90 vol% is particularly preferred.

[Reaction temperature]

In the method of the present invention, the temperature at which a catalyst is brought into contact with a carbon-containing compound varies depending on carbon-containing compounds used or the like. The temperature is generally 400 to 1100°C, preferably 500 to 800°C. In a case where the temperature is too low and a case where the temperature is too high, the production amount of a carbon fiber aggregate becomes remarkably low in some cases. Further, at high temperatures at which a side reaction other than the production of carbon fibers occurs, electrically non-conductive substances that are not suitable for uses as fillers tend to attach to the surface of the carbon fibers in a large amount.

[Carbon fiber aggregate]

In a carbon fiber aggregate obtained by the method of the present invention, each carbon fiber aggregates into a peculiar cocoon-shaped form. The cocoon-shaped form probably contributes to retaining a state in which carbon fiber aggregates are favorably dispersed in a resin composite and a state in which the network of the fibers is maintained, the states being contradictory to each other.

A primary carbon fiber forming the carbon fiber aggregate obtained by the method of the present invention has a fiber diameter (in diameter) of preferably 5 to 100 nm, more preferably 5 to 70 nm, particularly preferably 5 to 50 nm. Further, the primary carbon fiber generally has an aspect ratio (fiber length/fiber diameter) of 5 to 1000. The fiber diameter and the fiber length are determined by using electron micrographs.

In a primary carbon fiber in a preferred embodiment of the present invention, graphitic layers extend approximately parallel to the fiber axis. Note that the phrase "approximately parallel" as used herein means that the slant of a graphitic layer with respect to the fiber axis is within about $\pm 15°$. The phrase "graphitic layers" refers to graphene sheets forming a carbon fiber, and the graphitic layers can be observed as stripe patterns in transmission electron micrographs (TEMs).

The length of the graphitic layer is preferably 0.02 to 15 times the fiber diameter. As the length of the graphitic layer is shorter, when a carbon fiber is filled in, for example, a resin, the adhesion strength between the carbon fiber and the resin becomes higher. As a result, a composite of the resin and the carbon fiber has a higher mechanical strength. The length of the graphitic layer and the slant of the graphitic layer can be measured through observation of electron micrographs or the like. In the primary carbon fiber in the preferred embodiment of the present invention, the number of the graphitic layers having a length of less than 2 times the fiber diameter accounts for 30 to 90% of the total number of the graphitic layers. The length of the graphitic layer is measured by using electron micrographs.

Further, the primary carbon fiber in the preferred embodiment has a tube shape having a void in the central portion of the fiber. The void portion may be continuous in the fiber longitudinal direction, or may be discontinuous. The ratio of the fiber diameter (d) to the inner diameter of the void portion (do), $d_0/d$, is not particularly limited, and is generally 0.1 to 0.8, preferably 0.1 to 0.6.

In the primary carbon fiber having a tube shape in the preferred embodiment of the present invention, a shell surrounding the void preferably has a multi-layered structure. Specific examples include a primary carbon fiber in which the inner layer of the shell is formed of crystalline carbon and the outer layer of the shell includes a thermal decomposition layer and is formed of carbon, and a primary carbon fiber in which graphitic layers comprise a portion in which layers are regularly arranged in parallel and a portion in which layers are irregularly arranged at random.

When the former carbon fiber in which the inner layer of the shell is formed of crystalline carbon and the outer layer of the shell includes a thermal decomposition layer and is formed of carbon is filled in, for example, a resin, the adhesion strength between the carbon fiber and the resin becomes higher. As a result, a composite of the resin and the carbon fiber has a higher mechanical strength.

In the carbon fiber in which graphitic layers comprise a portion in which layers are regularly arranged in parallel and a portion in which layers are irregularly arranged at random (primary carbon fiber), when a layer formed of an irregular carbon atom arrangement is thick, its fiber strength is apt to be weaker, and when the layer formed of an irregular carbon atom arrangement is thin, the interfacial strength with a resin is apt to be weaker. In order to enhance the fiber strength and enhance the interfacial strength with a resin, it is recommended that the layer formed of an irregular carbon atom arrangement (irregular graphitic layer) having a proper thickness be present, or that thick irregular graphitic layers and thin irregular graphitic layers be mixed (distributed) in one fiber.

The carbon fiber aggregate of the present invention has a BET specific surface area of preferably 20 to 400 $m^2/g$, more preferably 30 to 350 $m^2/g$, still more preferably 40 to 350 $m^2/g$. Note that, in this description, the values of the specific surface area were measured by a BET method using nitrogen adsorption.

The shape of the primary carbon fiber of the present invention is characterized in that the almost whole region of the fiber is formed of a non-linear undulating fiber, unlike "straight to slightly bent fibril" as shown in Patent Document 1. It is estimated that the fibers have a relatively strong aggregating force in a secondary aggregate fiber because the fibers are undulating as described above. Further, because the fibers have such undulating structure, the network of the fibers is not discontinued even when the carbon fiber aggregates are dispersed in a resin in a small amount, and hence the undulating structure may be one cause for expressing electrical conductivity in a region of a small addition amount in which fibers similar to straight fibers of the prior art do not express electrical conductivity.

The carbon fiber aggregate in the preferred embodiment of the present invention is characterized by forming a secondary aggregate fiber in which the primary carbon fibers are aggregated as described above. Observation by using electron micrographs can lead to identification of the structure of the carbon fiber aggregate described above. The fiber diameter, the fiber length, and the like are each identified as the average value of the values of several tens to several hundreds of samples observed by using electron micrographs.

The above-mentioned undulating primary carbon fiber is characterized in that undulating primary carbon fibers are aggregated relatively randomly in the secondary aggregate fiber. Further, the secondary aggregate fiber itself is also non-linear, that is, is bent or is undulating like each carbon fiber. The diameter of the secondary aggregate fiber is generally 1 to 100 $\mu$m, preferably 5 to 100 $\mu$m, more preferably 10 to 50 $\mu$m. The secondary aggregate fibers are further aggregated to form an aggregate clump, in which ends of the secondary aggregate fibers are taken in many cases, and hence correct measurement of the length of the secondary aggregate fibers is often difficult. The length of the aggregated fibers which can be confirmed by electron microscope observation is generally 5 to 500 $\mu$m, preferably 10 to 500 $\mu$m, more preferably 20 to 200 $\mu$m.

Conventional production methods provide only an amorphous aggregate clump and a nearly spherical aggregate clump, which have a small electrical conductivity-imparting effect on a resin composite material by addition in a small amount. However, the production method of the present invention provides a carbon fiber aggregate including a cocoon-shaped aggregate clump and having a high electrical conductivity-imparting effect on a resin composite material. A cocoon-shaped aggregate clump having a larger major/minor diameter ratio has a larger electrical conductivity-imparting effect.

That is, in the carbon fiber aggregate of the present invention, secondary aggregate fibers are further aggregated to form a cocoon-shaped aggregate clump. The cocoon-shaped aggregate clump can be identified based on the defined major/minor diameter ratio by observation of electron micrographs. It is difficult in many cases to grasp quantitatively the details of the carbon fiber aggregate of the present invention, because the carbon fiber aggregate is actually obtained as a mixture with amorphous aggregate clumps or nearly spherical aggregate clumps each having a different shape from a cocoon shape, or because an aggregate clump breaks into separated fibers, resulting in fibers having shorter major diameter in a sample adjustment stage for electron microscope photography or the like. The carbon fiber aggregate in the preferred embodiment includes cocoon-shaped aggregate clumps having a major/minor diameter ratio of at least 3 or more, preferably 5 or more, more preferably 7 or more. Further, the minor diameter of the cocoon-shaped aggregate clump is preferably 50 $\mu$m or more, more preferably 100 $\mu$m or more, still more preferably 300 $\mu$m or more.

The degree of the aggregation of the secondary aggregate fibers in the cocoon-shaped aggregate clump is coarser than the degree of the aggregation of each primary carbon fiber in the secondary aggregate fiber. Thus, when the cocoon-shaped aggregate clumps are added in a resin, followed by kneading, the secondary aggregate fibers are dispersed relatively easily. However, individual primary carbon fibers forming the secondary aggregate fiber are firmly tangled with each other, and hence the individual primary carbon fibers are not completely dispersed (without being in a separated state) in a resin composite. This probably leads to the maintenance of the network structure of the fibers. When the cocoon-shaped aggregate has a large major/minor diameter ratio, the secondary aggregate fibers are estimated to have orientation property. When the length of the secondary aggregate fibers is short, orientation is difficult to occur, and hence the length of the secondary fibers is probably necessary to be long to a certain extent for orientation to occur. The secondary aggregate fibers probably form the above-mentioned high dispersion state easily when the carbon fiber aggregate is added in a composite material and the resultant product is kneaded. In this case, secondary aggregate fibers having a long length contribute to easy maintenance of the network structure of the secondary aggregate fibers. This is probably a cause for being capable of imparting electrical conductivity to a composite material by addition in a small amount.

As described above, the carbon fiber of the present invention has a peculiar cocoon-shaped aggregate structure, and hence the electrical conductivity of a resin composite material is expected to be expressed even in a region of a small addition amount in which the electrical conductivity has never been expressed by using prior arts.

By blending the carbon fiber aggregate in the preferred embodiment of the present invention with a resin and kneading the blend, a resin composite material can be prepared. In general, the addition amount of a carbon fiber blended in a resin composite material is 0.5 to 30 mass%. In the case where conventional carbon fibers were not blended at 5 to 15 mass%, desired electrical conductivity was not obtained. However, when the carbon fiber aggregate of the present invention is used, its addition in an amount equal to or less than one third to one fifth (mass ratio) the addition amount of the conventional carbon fibers provides an excellent effect of exhibiting the same electrical conductivity. To be specific, its addition at 0.5 to 10 mass%, preferably at 0.5 to 5 mass% provides sufficient electrical conductivity. When the addition amount is less than 0. 5 mass%, it is difficult to create a pathway for sufficient electrical conductivity and thermal conductivity in a resin composite body. On the other hand, when the addition amount is at as high a concentration as exceeding 30 mass%, the characteristics of a resin itself is apt to disappear.

A resin to be used for the resin composite material in the preferred embodiment of the present invention is not particularly limited, and a thermosetting resin, a photocurable resin, or a thermoplastic resin is preferred.

As the thermosetting resin, there can be used polyamide, polyether, polyimide, polysulfone, an epoxy resin, an unsaturated polyester resin, a phenolic resin, for example. As the photocurable resin, there can be used radical curable resins (such as acrylic oligomers including acrylic monomer, polyester acrylate, urethane acrylate, and epoxy acrylate, unsaturated polyester, and thiol-ene copolymer) and cation curable resins (such as an epoxy resin, an oxetane resin, and a vinyl ether-based resin), for example. As the thermoplastic resin, there can be used a nylon resin, a polyethylene resin, a polyamide resin, a polyester resin, a polycarbonate resin, a polyarylate resin, and a cyclopolyolefin resin, for example.

The resin composite material in which the carbon fiber aggregate in the preferred embodiment according to the present invention is blended can be suitably used as forming materials for products required to have electrical conductivity and antistatic property in addition to impact resistance, such as OA equipment, electronic equipment, electrically conductive parts for packaging, electrically conductive slide members, electrically conductive and thermally conductive members, antistatic parts for packaging, and automobile parts on which electrostatic painting is applied. When those products are produced, conventionally known forming methods for an electrically conductive resin composition can be used. Examples of the forming methods include an injection molding method, a hollow molding method, an extrusion molding method, a sheet molding method, a thermoforming method, a rotational molding method, a lamination forming method, and a transfer molding method.

Examples

Hereinafter, the present invention is specifically described by referring to examples and comparative examples. However, those examples are just for exemplification, and the present invention is not limited to them.

Example 1:

[Heat treatment]

Gibbsite-type aluminum hydroxide H-100 (manufactured by Showa Denko K. K., BET specific surface area: 0.12 $m^2$/g) was heated in a muffle furnace at 650°C for 1 hour. The specific surface area of aluminum hydroxide after the heat treatment measured by a BET method was 140$m^2$/g. Note that aluminum hydroxide used is an aggregate of about 40 primary particles each having a diameter of about 25 $\mu$m. Table 1 shows the values of physical properties of aluminum hydroxide (a BET specific surface area before heat treatment, a particle size distribution index, the number of primary particles, and the diameter of primary particles).

[Support of catalyst]

1 part by mass of aluminum hydroxide after heat treatment and 2. 6 parts by mass of a methanol solution of iron nitrate nonahydrate (manufactured by Junsei Chemical Co., Ltd., Guaranteed Reagent) (having a concentration of 70 mass%) were mixed. After that, the mixture was dried in a vacuum dryer at 120°C for 16 hours, thereby yielding a supported catalyst supporting a catalytic metal (Fe) at 20 mass%.

[Synthesis of carbon fiber aggregate]

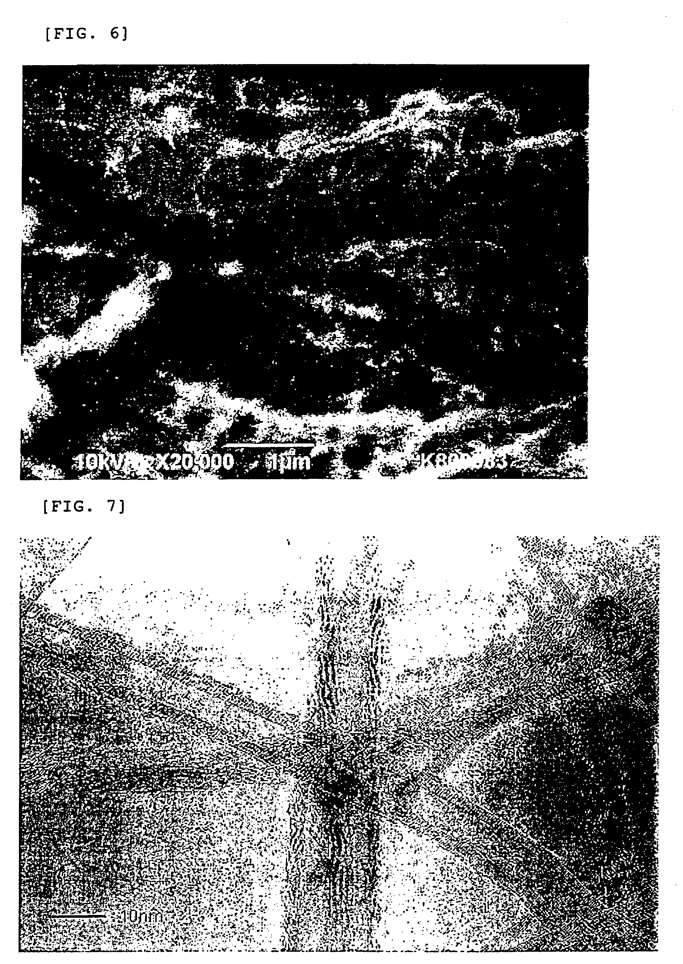

A horizontal reaction furnace having a height of about 40 cm was placed in the central portion of a quartz tube having an inner diameter of 3.2 cm (having a length of 1 m), and a quartz boat on which the catalyst was put was placed in the horizontal reaction furnace, in which a nitrogen gas was introduced at 500 ml/minute. The quartz tube was placed in an electrical furnace and was heated to 640°C over 1 hour. Immediately after that, the nitrogen gas was replaced by an ethylene gas at 250 ml/minute and a hydrogen gas (having an ethylene concentration of 50 vol%) at 250 ml/minute, and a reaction was performed for 20 minutes. Under a nitrogen gas atmosphere, the reaction product was cooled and the resultant carbon fiber aggregate was then collected. Mass increase (amount of product collected/amount of catalyst fed) was seven times. Electron micrographs of the product were shown in FIG. 4 (aggregate clumps, 43 magnifications), FIG. 5 (secondary aggregate fibers, 2500 magnifications), FIG. 6 (primary carbon fibers, 20,000 magnifications), and FIG. 7 (primary carbon fibers, 2,000,000 magnifications). As shown in FIG. 4, the products were formed as cocoon-shaped aggregate clumps having roundness, with a minor diameter of about 100 to 300 $\mu$m, a major diameter of about 100 to 1000 $\mu$m, and a major/minor diameter ratio of about 3 to 6. Each secondary aggregate fiber had a undulating shape, with a diameter of about 2 to 5 $\mu$m and a length of at least about 10 $\mu$m (FIG. 5). Each fiber (primary fiber) is a non-linear, undulating fiber (FIG. 6), with a diameter of about 10 nm, and in the fiber, graphitic layers extend approximately parallel to the fiber axis, and attachment of carbon layers probably attributed to thermal decomposition was recognized in places on the surface of the fiber (FIG. 7).

[Preparation/evaluation of resin composite material]

1 part by mass of the carbon fiber aggregate produced in Example 1 and 99 parts by mass of a cycloolefin polymer (manufactured by Zeon Corporation; ZEONOR 1420R) were kneaded under the conditions of 270°C, 80rpm, and 10 minutes by using Labo Plastomill (manufactured by Toyo Seiki Seisaku-sho, Ltd.; 30C 150 type), to thereby yield a resin composite material. The composite material was subjected to thermal pressing under the conditions of 280°C, 50 MPa, and 60 seconds, to thereby produce a flat plate of 100 mm by 100 mm by 2 mm. The flat plate was measured for volume resistivity by a four-probe method in accordance with JIS-K 7194 by using a volume resistivity meter (manufactured by Mitsubishi Chemical Corporation; Loresta MCPT-410). As a result, the volume resistivity was $2 \times 10^3 \Omega \cdot$cm. Table 2 collectively shows catalyst preparation conditions (heat treatment temperature and the BET specific surface area of a support after heat treatment), the amount of a catalytic metal supported, carbon fiber synthesis temperature, and the results (mass increased and the resistance value of a composite material).

Example 2:

Example 2 was carried out in the same manner as Example 1, except that the synthesis temperature of a carbon fiber aggregate was changed to 690°C. The shape of the product was the same as that of Example 1. The synthesis condition (reaction temperature) and the results are shown in Table 2 in the same way as those of Example 1.

Example 3:

Example 3 was carried out in the same manner as Example 2, except that a product remaining on a 100-mesh (Me) sieve after the sieving of an H-10C with the sieve (BET specific surface area: 0.062 $m^2$/g), the H-10C being manufactured by Showa Denko K. K., was used as gibbsite-type aluminum hydroxide. The shape of the product was the same as that of Example 1. Physical properties of aluminum hydroxide used are shown in Table 1, and the synthesis condition and the results are shown in Table 2.

Example 4:

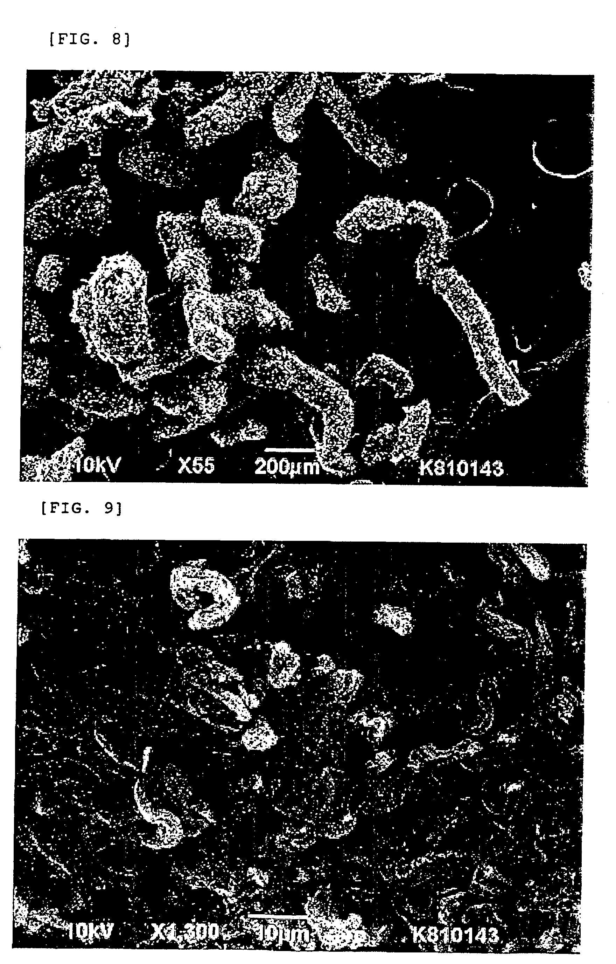

Example 4 was carried out in the same manner as Example 2, except that aluminum hydroxide obtained by classifying gibbsite-type aluminum hydroxide obtained by the method described in JP 2003-0956455 A was used as a material, the aluminum hydroxide including about 1 to 5 primary particles, having a primary particle diameter of about 20 to 50 $\mu$m, having a BET specific surface area of 0.24 $m^2$/g, having a cumulative 50% volume particle diameter $D_{50}$ of 45 $\mu$m, and having a particle size distribution index of 1.20, heat treatment temperature was changed to 850°C, and the amount of a catalyst supported was changed to 10 mass%. FIGS. 8 and 9 show electron micrographs of carbon fiber aggregates (FIG. 8: 55 magnifications, FIG. 9: 1300 magnifications). Each carbon fiber aggregate had a minor diameter of about 100 to 200 $\mu$m, a major diameter of about 200 to 800 $\mu$m, and a major/minor diameter ratio of about 4 to 10. Physical properties of aluminum hydroxide used are shown in Table 1, and the synthesis condition and the results are shown in Table 2.

Comparative Example 1:

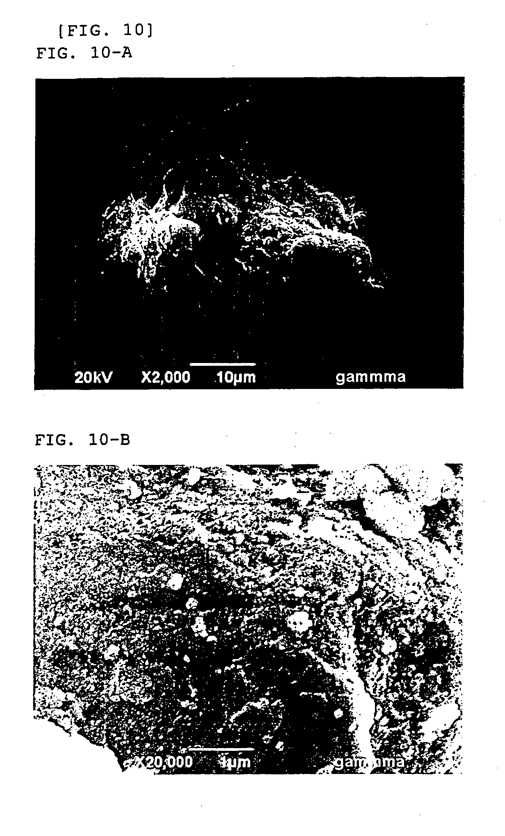

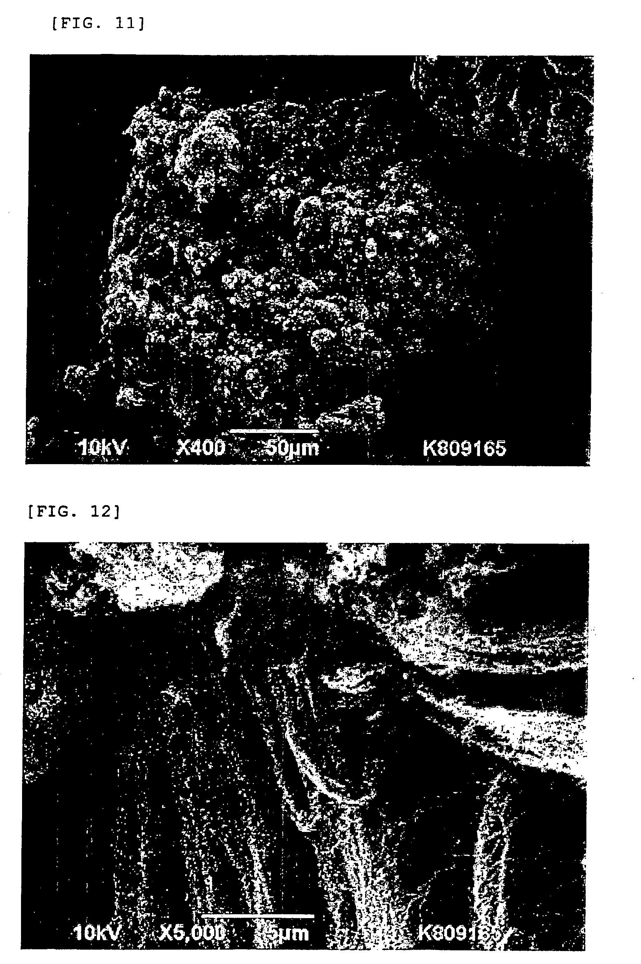

$\gamma$-alumina (manufactured by Strem Chemicals, Inc., BET specific surface area: 130 $m^2$/g, cumulative 50% volume particle diameter $D_{50}$: 10 $\mu$m) was used as a support like in US 5726116 A (Patent Document 1). FIGS. 10-A and 10-B show electron micrographs of the support (FIG. 10-A: 2000 magnifications, FIG. 10-B: 20,000 magnifications). The figures clearly show that the support is not a product obtained by heat-treating coarse gibbsite-type aluminum hydroxide, but is a product obtained by heat-treating an alumina gel or pseudoboehmite synthesized by a neutralization method or the like. Comparative Example 1 was carried out in the same manner as Example 2, except that there was used, as a catalyst, a product obtained by mixing 1 part by mass of the support and 2.6 parts by mass of a methanol solution of iron nitrate nonahydrate (having a concentration of 70 mass%) and then drying the mixture in a vacuum dryer at 120°C for 16 hours. FIG. 11 (400 magnifications) and FIG. 12 (5000 magnifications) show electron micrographs of a product. The product was a mixture of secondary aggregate fibers having a shape similar to a straight line and randomly oriented carbon fibers. The mixtures further aggregated to form an aggregate clump. The aggregate clump was a mixture of aggregates having various shapes similar to a sphere and broken aggregates. The synthesis condition and the results are shown in Table 3.

Comparative Example 2:

Comparative Example 2 was carried out in the same manner as Example 2, except that H-43M (BET specific surface area: 7.3 m$^2$/g, cumulative 50% volume particle diameter D$_{50}$: 0.68 $\mu$m) manufactured by Showa Denko K. K. was used as gibbsite-type aluminum hydroxide and heat treatment temperature was changed to 550°C. The shape of the product was the same as that of Comparative Example 1. Physical properties of aluminum hydroxide used are shown in Table 1, and the synthesis condition and the results are shown in Table 3.

Comparative Example 3:

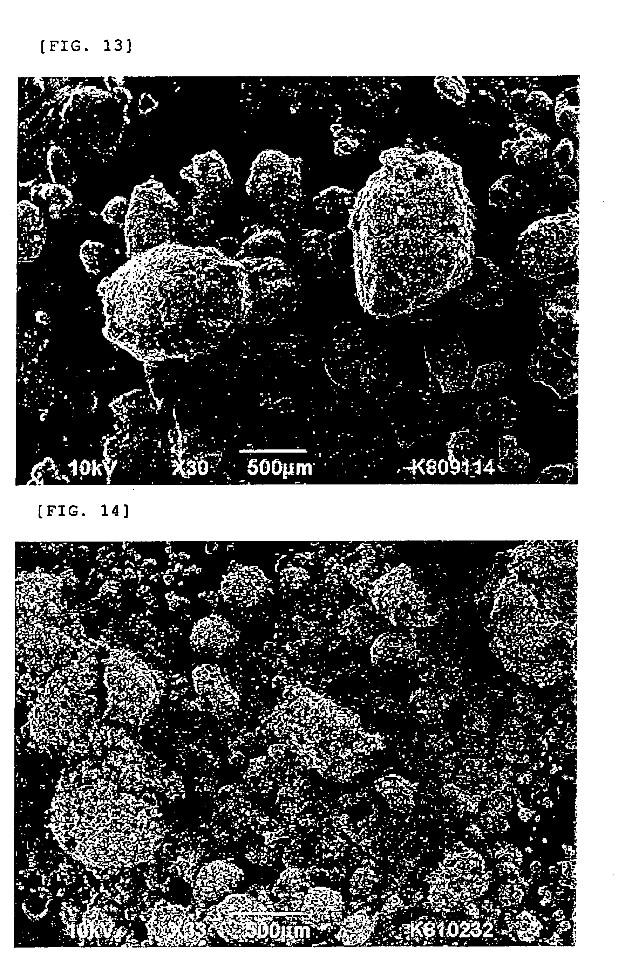

Comparative Example 3 was carried out in the same manner as Comparative Example 2 except that heat treatment temperature was changed to 700°C. FIG. 13 shows an electron micrograph of the resultant carbon fiber aggregates (30 magnifications). The aggregates had various shapes similar to a sphere. The synthesis condition and the results are shown in Table 3.

Comparative Example 4:

Comparative Example 4 was carried out in the same manner as Example 2, except that boehmite APYRAL AOH 60 (BET specific surface area: 6 m$^2$/g, cumulative 50% volume particle diameter D$_{50}$: 0.9 $\mu$m) manufactured by Nabaltec AG was used as aluminum hydroxide and heat treatment temperature was changed to 850°C. The shape of the product was the same as that of Comparative Example 3. The synthesis condition and the results are shown in Table 3.

Comparative Example 5:

Comparative Example 5 was carried out in the same manner as Example 2, except that there was used, as aluminum hydroxide, pseudoboehmite V-250 (BET specific surface area: 230m$^2$/g, cumulative 50% volume particle diameter D$_{50}$: 50 $\mu$m, electron microscope image: FIG. 3) manufactured by Union Showa K. K., the pseudoboehmite V-250 being produced by carrying out synthesis by a neutralization method of an aluminum solution, followed by granulation and drying, and heat treatment temperature was changed to 850°C. The products were aggregates having a shape similar to a sphere (FIG. 14, 33 magnifications). The synthesis condition and the results are shown in Table 3.

Comparative Example 6:

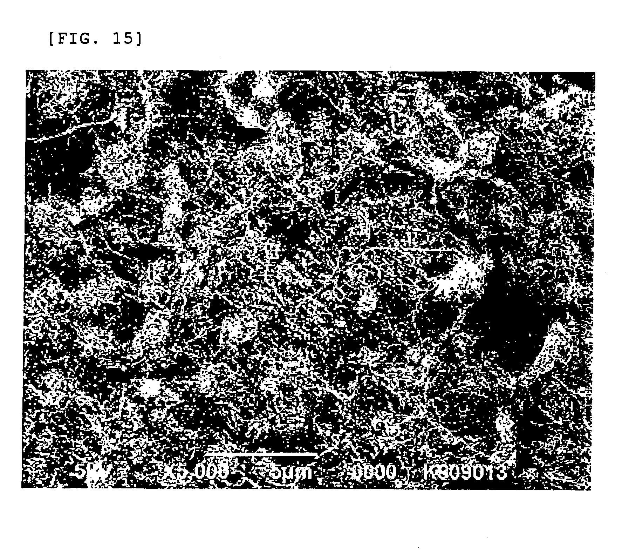

Comparative Example 6 was carried out in the same manner as Comparative Example 1, except that there was used, in place of $\gamma$-alumina, $\delta$-alumina (Oxide Alu C manufactured by Degussa AG, BET specific surface area: 100 m$^2$/g, cumulative 50% volume particle diameter D$_{50}$: 0.9 $\mu$m) synthesized by a gas phase method. The outer appearance of the aggregates was the same as that of Comparative Example 3. Each fiber was oriented at random in the aggregate (FIG. 15, 5000 magnifications). The synthesis condition and the results are shown in Table 3.

Comparative Example 7:

Comparative Example 7 was carried out in the same manner as Comparative Example 1, except that there was used, as $\gamma$-alumina, AKP-G015 (BET specific surface area: 150 m$^2$/g, cumulative 50% volume particle diameter D$_{50}$: 2.1 $\mu$m) manufactured by Sumitomo Chemical Co., Ltd. The shapes of the fibers were the same as those of Comparative Example 6. The synthesis condition and the results are shown in Table 3.

Examples 5 and 6 and Comparative Examples 8 and 9:

Examples 5 and 6 and Comparative Examples 8 and 9 were carried out in the same manner as Example 2, except that heat treatment temperatures were changed to the temperatures shown in Tables 4 and 5. The synthesis conditions and the results are shown in Tables 4 and 5.

Comparative Example 10:

A catalyst was prepared by a method involving supporting a catalytic metal on aluminum hydroxide and then heat-treating the resultant as prepared in EU 1797950 A (Patent Document 3). That is, 1 part by mass of gibbsite-type aluminum hydroxide (H-43 M manufactured by Showa Denko K. K.) and 2.6 parts by mass of a methanol solution of iron nitrate nonahydrate (having a concentration of 70 mass%) were mixed. After that, the mixture was dried in a vacuum dryer at 120°C for 16 hours, and the dried catalyst was subjected to heat treatment at 700°C for 1 hour. Comparative Example 10 was carried out in the same manner as that in Example 2 except for using the catalyst after the heat treatment. The shape of the product was the same as that of Comparative Example 3. The synthesis condition and the results are shown in Table 6.

Comparative Examples 11 and 12:

Comparative Examples 11 and 12 were carried out in the same manner as Comparative Example 10, except that there were used, in place of gibbsite-type aluminum hydroxide, bayerite (Versal BT manufactured by Union Showa K. K., BET specific surface area: 25 $m^2$/g, cumulative 50% volume particle diameter $D_{50}$: 20 $\mu$m) (Comparative Example 11) and pseudoboehmite (V-250 manufactured by Union Showa K. K.) (Comparative Example 12). The synthesis conditions and the results are shown in Table 6.

[Table 1]

Table 1 Table of physical properties of aluminum hydroxide used

|  |  | Examples 1 and 2 | Example 3 | Example 4 | Comparative Examples 2 and 3 |
|---|---|---|---|---|---|
| BET specific surface area | $m^2$/g | 0.12 | 0.06 | 0.24 | 7.3 |
| D50 | $\mu$m | 76 | 165 | 45 | 0.68 |
| D10 | $\mu$m | 41.3 | 126 | 28 | 0.33 |
| D90 | $\mu$m | 120 | 228 | 82 | 1.174 |
| (D90-D10)/D50 |  | x1.04 | 0.62 | 1.20 | 1.24 |
| Number of primary particles | pieces | about 40 | about 40 | about 1 to 5 | about 1 |
| Primary particle diameter | $\mu$m | about 25 | about 40 | about 20 to 50 | about 1 |

[Table 2]

Table 2

|  |  |  | Example 1 | Example 2 | Example 3 | Example 4 |
|---|---|---|---|---|---|---|
| Support | Heat treatment temperature | °C | 650 | 650 | 650 | 850 |
|  | BET specific surface area | $m^2$/g | 140 | 140 | 140 | 96 |
| Catalyst | Amount of Fe supported | wt% | 20 | 20 | 20 | 10 |
| Carbon fiber | Reaction temperature | °C | 640 | 690 | 690 | 690 |
|  | Mass increase |  | 7 | 8 | 6 | 6 |
|  | BET specific surface area | $m^2$/g | 270 | 235 | 240 | 240 |
| Resistance value of composite material |  | $\Omega$cm | $2\times10^3$ | $2\times10^4$ | $2\times10^2$ | $6\times10^1$ |

[Table 3]

Table 3

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Support | Heat treatment temperature | °C | No heat treatment | 550 | 700 | 850 | 850 | No heat treatment | No heat treatment |
| | BET specific surface area | m$^2$/g | 130 | 210 | 176 | 180 | 180 | 100 | 100 |
| Carbon fiber | Mass increase | | 6 | 7 | 8 | 5 | 8 | 13 | 14 |
| Resistance value of composite material | | Ωcm | $3\times10^{16}$ | $3\times10^{14}$ | $4\times10^{9}$ | $4\times10^{10}$ | $2\times10^{13}$ | $4\times10^{14}$ | $9\times10^{14}$ |

[Table 4]

Table 4

|  |  |  | Example 2 | Example 5 | Example 6 |
|---|---|---|---|---|---|
| Support | Heat treatment temperature | °C | 650 | 950 | 550 |
|  | BET specific surface area | m$^2$/g | 140 | 76 | 180 |
| Carbon fiber | Mass increase |  | 8 | 7 | 7 |
|  | BET specific surface area | m$^2$/g | 235 | 230 | 245 |
| Resistance value of composite material |  | Ωcm | $2\times10^4$ | $1\times10^4$ | $3\times10^6$ |

[Table 5]

Table 5

|  |  |  | Comparative Example 8 | Comparative Example 9 |
|---|---|---|---|---|
| Support | Heat treatment temperature | °C | 1050 | 450 |
|  | BET specific surface area | m$^2$/g | 24 | 213 |
| Carbon fiber | Mass increase |  | 4 | 5 |
| Resistance value of composite material |  | Ωcm | $1\times10^{12}$ | $9\times10^{10}$ |

[Table 6]

Table 6

|  | Comparative Example 10 | Comparative Example 11 | Comparative Example 12 |
|---|---|---|---|
| Mass increase | 11.5 | 8.3 | 18.3 |
| Resistance value of composite material Ωcm | $5\times10^{14}$ | $3\times10^{16}$ | $2\times10^{14}$ |

From Tables 1 to 6, it is found that a carbon fiber aggregate, synthesized by bringing a catalyst into contact with a carbon source in a heated zone, the catalyst being prepared by supporting a catalytic metal on a support having a particular specific surface area obtained by heat-treating aluminum hydroxide (gibbsite) having a specific surface area and a cumulative 50% volume particle diameter $D_{50}$ both defined in claim 1, imparts electrical conductivity to a resin at a blending amount of as small as 1 mass%, compared with a carbon fiber aggregate synthesized by using a catalyst prepared from aluminum hydroxide having a specific surface area and a cumulative 50% volume particle diameter $D_{50}$ outside the ranges defined in claim 1 (Examples 1 to 4 and Comparative Examples 2 and 3), that in a case where a catalyst prepared from gibbsite is used, there is provided a carbon fiber aggregate having a larger electrical conductivity-imparting effect on a resin, compared with cases where catalysts prepared from other kinds of aluminum hydroxide are used (Examples 1 to 4 and Comparative Examples 4, 5, 11, and 12), that in a case where a catalyst prepared by setting the heat treatment temperature of aluminum hydroxide to a temperature within the range defined in claims is used, there is provided a carbon fiber aggregate having a larger electrical conductivity-imparting effect on a resin, compared with a case where a catalyst prepared at a temperature outside the range is used (Examples 2, 5, and 6 and Comparative Examples 8 and 9), and that a carbon fiber aggregate synthesized by using a catalyst prepared by a method in which gibbsite is used, but a catalytic metal is supported on the gibbsite and heat treatment is then carried out as prepared by the prior art (Patent Document 3) has a smaller electrical conductivity-imparting effect on a resin (Comparative Example 10).

**Claims**

**1.**   A method of producing a carbon fiber aggregate, comprising the steps of:

preparing aluminum hydroxide which has a BET specific surface area of 1 m$^2$/g or less and has a cumulative 50% volume particle diameter ($D_{50}$) of 10 to 300 $\mu$m;

yielding a catalyst support by heat-treating the aluminum hydroxide until the BET specific surface area reaches 50 to 200 m$^2$/g;

having a catalytic metal or a catalytic metal precursor be supported on the catalyst support; and

contacting the catalyst with a carbon-containing compound in a heated zone.

2. The method of producing the carbon fiber aggregate according to claim 1, in which the aluminum hydroxide is heat-treated at a temperature of 500 to 1000°C.

3. The method of producing the carbon fiber aggregate according to claim 1 or 2, in which the carbon fiber aggregate is a cocoon-shaped aggregate clump formed by agglomerating secondary aggregate fibers, each of the secondary aggregate fibers having a diameter of 1 $\mu$m or more and a length of 5 $\mu$m or more and being non-linear, which secondary aggregate fibers are formed by agglomerating non-linear carbon fibers, the non-linear carbon fibers each having a diameter of 5 to 100 nm and an aspect ratio of 5 to 1000, and the non-linear carbon fibers comprising graphitic layers which extend approximately parallel to a fiber axis.

4. The method of producing the carbon fiber aggregate according to claim 3, in which the cocoon-shaped aggregate includes a cocoon-shaped aggregate having a major/minor diameter ratio of 5 or more.

5. The method of producing the carbon fiber aggregate according to any one of claims 1 to 4, in which the aluminum hydroxide is gibbsite.

6. The method of producing the carbon fiber aggregate according to any one of claims 1 to 5, in which aluminum hydroxide having a particle size distribution index of 1.50 or less is used, the particle size distribution index being represented by Equation (1),

$$\texttt{Particle size distribution index=(D}_{90}\texttt{-D}_{10}\texttt{)/D}_{50} \qquad \texttt{(1)}$$

where $D_{90}$, $D_{10}$, and $D_{50}$ represent a cumulative 90% volume particle diameter, a cumulative 10% volume particle diameter, and a cumulative 50% volume particle diameter, respectively measured by a particle size distribution analyzer.

7. The method of producing the carbon fiber aggregate according to any one of claims 1 to 6, in which aluminum hydroxide prepared from primary particles each having a size of 5 to 300 $\mu$m is used.

8. The method of producing the carbon fiber aggregate according to any one of claims 1 to 7, in which the catalytic metal or the catalytic metal precursor includes at least one of Fe, Ni, Co, Cr, Mo, W, Ti, V, Ru, Rh, Pd, Pt, and rare-earth elements.

9. A carbon fiber aggregate, comprising a cocoon-shaped aggregate clump having a major/minor diameter ratio of 5 or more formed by agglomerating secondary aggregate fibers, each of the secondary aggregate fibers having a diameter of 1 $\mu$m or more and a length of 5 $\mu$m or more and being non-linear, which secondary aggregate fibers are formed by agglomerating non-linear carbon fibers, the non-linear carbon fibers each having a diameter of 5 to 100 nm and an aspect ratio of 5 to 1000, and the non-linear carbon fibers comprising graphitic layers which extend approximately parallel to a fiber axis.

10. A resin composite material, comprising the carbon fiber aggregate according to claim 9.

11. A catalyst for producing a carbon fiber aggregate, which is prepared by the steps of:

preparing aluminum hydroxide which has a BET specific surface area of 1 m$^2$/g or less and has a cumulative 50% volume particle diameter ($D_{50}$) of 10 to 300 $\mu$m;

yielding a catalyst support by heat-treating the aluminum hydroxide until the BET specific surface area reaches 50 to 200 m$^2$/g; and

having a catalytic metal or a catalytic metal precursor be supported on the catalyst support.

**EP 2 351 705 B1**

**Patentansprüche**

1. Verfahren zum Herstellen eines Kohlenstofffaseraggregats, welche die folgenden Stufen umfasst:

    das Herstellen von Aluminiumhydroxid, das eine spezifische Oberfläche nach BET von 1 m$^2$/g oder weniger hat und einen kumulativen 50% Volumen-Teilchendurchmesser (D50) von 10 bis 300 $\mu$m aufweist;
    das Erzeugen eines Katalysatorträgers durch Hitzebehandeln des Aluminiumhydroxids, bis die spezifische Oberfläche nach BET 50 bis 200 $^2$/g erreicht;
    das Aufbringen eines katalytischen Metalls oder eines Vorläufers eines katalytischen Metalls auf den Katalysatorträger; und
    das Kontaktieren des Katalysators mit einer Kohlenstoff enthaltenden Verbindung in einer Heizzone.

2. Verfahren zum Herstellen eines Kohlenstofffaseraggregats nach Anspruch 1, wobei das Aluminiumhydroxid bei einer Temperatur von 500 bis 1000°C hitzebehandelt wird.

3. Verfahren zum Herstellen des Kohlenstofffaseraggregats nach Anspruch 1 oder 2, wobei das Kohlenstofffaseraggregat ein kokonförmiger Aggregatklumpen ist, der durch Agglomerieren von sekundären Aggregatfasern erzeugt wird, wobei jede der sekundären Aggregatfasern einen Durchmesser von 1 $\mu$m oder mehr und eine Länge von 5 $\mu$m oder mehr aufweist und nichtlinear ist, wobei die sekundären Aggregatfasern durch Agglomerieren von nicht-linearen Kohlenstofffasern erzeugt werden, die nicht-linearen Kohlenstofffasern jeweils einen Durchmesser von 5 bis 100 nm und ein Längen-Breiten-Verhältnis von 5 bis 1000 aufweisen, und die nicht-linearen Kohlenstofffasern Graphitschichten umfassen, die sich etwa parallel zu der Faserachse erstrecken.

4. Verfahren zum Herstellen des Kohlenstofffaseraggregats nach Anspruch 3, wobei das kokonförmige Aggregat ein kokonförmiges Aggregat mit einem Verhältnis des größten Durchmessers zu dem kleinsten Durchmesser von 5 oder mehr enthält.

5. Verfahren zum Herstellen eines Kohlenstofffaseraggregats nach einem der Ansprüche 1 bis 4, wobei das Aluminiumhydroxid Gibbsit ist.

6. Verfahren zum Herstellen eines Kohlenstofffaseraggregats nach einem der Ansprüche 1 bis 5, wobei Aluminiumhydroxid mit einem Index der Teilchengrößenverteilung von 1,50 oder weniger verwendet wird, wobei der Index der Teilchengrößenverteilung durch die Gleichung (1) dargestellt ist,

$$\texttt{Index der Teilchengrößenverteilung} = (D_{90}-D_{10})/D_{50} \qquad (1)$$

wobei $D_{90}$, $D_{10}$ und $D_{50}$ den kumulativen 90% Volumenteilchendurchmesser, den kumulativen 10 % Volumenteilchendurchmesser bzw. den kumulativen 50% Volumenteilchendurchmesser, gemessen mit einem Teilchengrößenverteilungs-Analysiergerät, darstellen.

7. Verfahren zum Herstellen des Kohlenstofffaseraggregats nach einem der Ansprüche 1 bis 6, wobei aus primären Teilchen mit jeweils einer Größe von 5 bis 300 $\mu$m hergestelltes Aluminiumhydroxid verwendet wird.

8. Verfahren zum Herstellen des Kohlenstofffaseraggregats nach einem der Ansprüche 1 bis 7, wobei das katalytische Metall oder der Vorläufer des katalytischen Metalls mindestens ein unter Fe, Ni, Co, Cr, Mo, W, Ti, V, Ru, Rh, Pd, Pt und Seltenerdelementen ausgewähltes Element umfasst.

9. Kohlenstofffaseraggregat, das einen kokonförmigen Aggregatklumpen mit einem Verhältnis des größten Durchmessers zu dem kleinsten Durchmesser von 5 oder mehr aufweist und erzeugt ist durch Agglomerieren von sekundären Aggregatfasern, wobei jede der sekundären Aggregatfasern einen Durchmesser von 1 $\mu$m oder mehr und eine Länge von 5 $\mu$m oder mehr hat und nichtlinear ist, wobei die sekundären Aggregatfasern durch Agglomerieren von nicht-linearen Kohlenstofffasern erzeugt werden, die nicht-linearen Kohlenstofffasern jeweils einen Durchmesser von 5 bis 100 nm und ein Längen-Breiten-Verhältnis von 5 bis 1000 haben und die nicht-linearen Kohlenstofffasern Graphitschichten umfassen, die sich etwa parallel zu der Faserachse erstrecken.

10. Harzverbundmaterial, welches das Kohlenstofffaseraggregat nach Anspruch 9 umfasst.

**11.** Katalysator zum Herstellen eines Kohlenstofffaseraggregats, der durch die folgenden Stufen hergestellt wird:

das Herstellen von Aluminiumhydroxid mit einer spezifischen Oberfläche nach BET von 1 $m^2$/g oder weniger und einem kumulativen 50% Volumenteilchendurchmesser ($D_{50}$) von 10 bis 300 $\mu$m; das Herstellen eines Katalysatorträgers durch Hitzebehandeln des Aluminiumhydroxids, bis die spezifische Oberfläche nach BET 50 bis 200 $m^2$/g erreicht; und
das Aufbringen eines katalytischen Metalls oder eines Vorläufers eines katalytischen Metalls auf den Katalysatorträger.

**Revendications**

**1.** Une méthode de production d'un agrégat de fibres de carbone, comprenant les étapes de
préparation d'hydroxyde d'aluminium qui a une surface spécifique BET de 1 $m^2$/g ou moins, et présente un diamètre de particule en volume cumulé à 50% ($D_{50}$) de 10 à 300 $\mu$m;
obtention d'un support catalytique par un traitement thermique de l'hydroxyde d'aluminium jusqu'à ce que la surface spécifique BET atteigne de 50 à 200 $m^2$/g ;
mise en support d'un métal catalytique ou d'un précurseur de métal catalytique sur le support catalytique ; et
mise en contact du catalyseur avec un composé contenant du carbone dans une zone chauffée.

**2.** La méthode de production de l'agrégat de fibres de carbone selon la revendication 1, dans laquelle l'hydroxyde d'aluminium subit un traitement thermique à une température de 500 à 1000°C.

**3.** La méthode de production de l'agrégat de fibres de carbone selon la revendication 1 ou 2, dans laquelle l'agrégat de fibres de carbone est une touffe d'agrégats en forme de cocon formée en agglomérant des fibres d'agrégats secondaires, chacune des fibres d'agrégats secondaires ayant un diamètre de 1 $\mu$m ou plus et une longueur de 5 $\mu$m ou plus et étant non-linéaire, lesquelles fibres d'agrégats secondaires étant formées en agglomérant des fibres de carbones non-linéaires, les fibres de carbones non-linéaires présentant chacune un diamètre de 5 à 100 nm et une proportion d'aspect de 5 à 1000, et les fibres de carbone non-linéaires comprenant des couches de graphite qui s'étendent approximativement de façon parallèle à un axe des fibres.

**4.** La méthode de production de l'agrégat de fibres de carbone selon la revendication 3, dans laquelle l'agrégat en forme de cocon inclut un agrégat en forme de cocon ayant une proportion de diamètres majeur/mineur de 5 ou plus.

**5.** La méthode de production de l'agrégat de fibres de carbone selon l'une quelconque des revendications 1 à 4, dans laquelle l'hydroxyde d'aluminium est gibbsite.

**6.** La méthode de production de l'agrégat de fibres de carbone selon l'une quelconque des revendications 1 à 5, dans laquelle de l'hydroxyde d'aluminium ayant un indice de distribution de taille de particules de 1,50 ou moins est utilisé, l'indice de distribution de taille de particules étant représenté par l'Equation (1),

$$\text{Indice de distribution de taille de particules} = (D_{90}-D_{10})/D_{50} \quad (1)$$

où $D_{90}$, $D_{10}$, et $D_{50}$ représentent un diamètre de particule en volume cumulé à 90%, un diamètre de particule en volume cumulé à 10%, et un diamètre de particule en volume cumulé à 50%, respectivement mesurés par un analyseur de distribution de taille de particules.

**7.** La méthode de production de l'agrégat de fibres de carbone selon l'une quelconque des revendications 1 à 6, dans laquelle de l'hydroxyde d'aluminium préparé à partir de particules primaires ayant chacune une taille de 5 à 300 $\mu$m est utilisé.

**8.** La méthode de production de l'agrégat de fibres de carbone selon n'importe laquelle des revendications 1 à 7, dans laquelle le métal catalytique ou le précurseur de métal catalytique comprend au moins l'un des Fe, Ni, Co, Cr, Mo, W, Ti, V, Ru, Rh, Pd, Pt et des éléments de terre rare.

**9.** Un agrégat de fibres de carbone, comprenant une touffe d'agrégats en forme de cocon ayant une proportion de diamètre majeur/mineur de 5 ou plus formé en agglomérant des fibres d'agrégats secondaires, chacune des fibres d'agrégats secondaires ayant un diamètre de 1 $\mu$m ou plus et une longueur de 5 $\mu$m ou plus et étant non-linéaire, lesquelles fibres d'agrégats secondaires étant formées en agglomérant des fibres de carbone non-linéaires, les fibres de carbone non-linéaires ayant chacune un diamètre de 5 à 100 nm et une proportion d'aspect de 5 à 1000, et les fibres de carbone non-linéaires comprenant des couches de graphite qui s'étendent approximativement de façon parallèle à un axe des fibres.

10. Un matériau de résine composite, comprenant un agrégat de fibres de carbone selon la revendication 9.

11. Un catalyseur pour produire un agrégat de fibres de carbone, qui est préparé par les étapes de :

préparation d'hydroxyde d'aluminium qui a une surface spécifique BET de 1 $m^2$/g ou moins, et présente un diamètre de particule en volume cumulé à 50% ($D_{50}$) de 10 à 300 $\mu$m ;
obtention d'un support catalytique par un traitement thermique de l'hydroxyde d'aluminium jusqu'à ce que la surface spécifique BET atteigne de 50 à 200 $m^2$/g ;
mise en support d'un métal catalytique ou d'un précurseur de métal catalytique sur le support catalytique.

[FIG. 1]

[FIG. 2]

[FIG. 3]

FIG. 3-A

FIG. 3-B

[FIG. 4]

[FIG. 5]

[FIG. 6]

[FIG. 7]

[FIG. 8]

[FIG. 9]

[FIG. 10]
FIG. 10-A

20kV    X2,000    10µm                    gammma

FIG. 10-B

X20,000    1µm              gammma

[FIG. 11]

[FIG. 12]

[FIG. 13]

[FIG. 14]

[FIG. 15]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5726116 A
- WO 9531281 A
- EP 1797950 A
- WO 2006079186 A
- JP 52107329 A
- WO 200650903 A

- WO 9531281 A1
- WO 2006079186 A1
- JP 2008174442 A
- JP 2003956455 A
- WO 1797950 A